# FASCICULE DE BREVET EUROPEEN

(11) **EP 2 590 904 B1**
(45) Date de publication et mention de la délivrance du brevet: **28.06.2017**
(21) Numéro de dépôt: 11729997.4
(22) Date de dépôt: 07.07.2011
(51) Int. Cl.: C03C 17/00, C03C 17/42, C03C 17/04

(54) **ARTICLE EN VERRE REVÊTU D'UNE COUCHE À BASE D'ÉMAIL**
MIT EINER EMAILLESCHICHT ÜBERZOGENER GLASARTIKEL
GLASS ARTICLE COATED WITH AN ENAMEL LAYER

(30) Priorité: 09.07.2010 BE 201000419
(43) Date de publication de la demande: 15.05.2013
(73) Titulaire: AGC Glass Europe, 1348 Louvain-la-Neuve (BE)
(72) Inventeur: DEVAUX, Thomas, B-6040 Jumet (BE); PIERRE, David, B-6040 Jumet (BE); PIETERS, Ronny, B-6040 Jumet (BE); VERRAES, Franck, B-6040 Jumet (BE)
(74) Mandataire: Bayot, Daisy
(86) Numéro de dépôt international: PCT/EP2011/061489
(87) Numéro de publication internationale: WO 2012/004337

(56) Documents cités:
- EP-A1- 0 916 626
- WO-A1-97/47565
- WO-A1-2007/135192
- US-A1- 2005 170 098
- US-A1- 2008 090 034

## Description

### 1. Domaine de l'invention

La présente invention concerne un article en verre revêtu, en particulier un article comportant une feuille de verre recouverte par un revêtement à base d'émail. L'article en verre de l'invention est trempable, c'est-à-dire qu'il peut être traité thermiquement en vue en particulier de sa trempe ultérieure.

### 2. Solutions de l'art antérieur

De nombreux types de feuilles de verre recouvertes par un revêtement à base d'émail sont déjà connus de l'état de la technique. En particulier, des feuilles de verre émaillées qui peuvent être trempées sont connues également. On citera, comme exemple, le produit Colorbel®, vitrage trempé dont une des faces est recouverte d'un émail coloré vitrifié. Néanmoins, avant la trempe et/ou la vitrification (ou sintérisation) de l'émail, le revêtement de ce produit ne présente pas une résistance mécanique suffisante qui lui permettrait de résister au transport, à la manutention et/ou au stockage avant son traitement thermique. Il est donc requis pour ce produit que la trempe se réalise pratiquement immédiatement après la production et de préférence sur la même ligne de production, ce qui constitue une sérieuse limitation d'un point de vue industriel.

Pourtant, les applications (principalement décoratives) de tels types de feuilles de verre nécessitent du verre trempé pour des raisons de sécurité.

Dès lors, il a été développé différents produits permettant de résoudre ces inconvénients. En particulier, la demande internationale WO2007/135192 A1 décrit une feuille de verre revêtue d'une couche à base d'émail dont la résistance mécanique avant trempe a été améliorée. Ce type de produit permet en effet d'éviter des griffes et des détériorations de la couche elle-même. Néanmoins, même si la couche elle-même reste intacte, ce type de produit subit une dégradation esthétique au cours du procédé de fabrication et surtout de son usinage : la face recouverte de la couche à base d'émail présente en effet à sa surface des traces, souvent foncées voire noires, laissées par les courroies (généralement sales) des engins de transport dans les usines, comme les bandes caoutchouc sur les tables de découpes ou les courroies de transport des rôdeuses automatiques. Les traitements de type lavage à la main ou même à la machine-à-laver industrielle se révèlent très souvent insuffisants. De plus, ces traces subsistent malheureusement après le traitement thermique en vue de la trempe (∼670°C). Toutefois, du fait que la couche à base d'émail est le plus souvent opaque, ces traces ne sont pas visibles lorsqu'on regarde au travers de la feuille de verre du côté non revêtu et elles ne sont donc pas incommodantes en cas d'application mono-face du produit verrier (ex. un revêtement mural). La dégradation esthétique existe néanmoins en cas d'application bi-face du produit verrier, telle que par exemple, une cloison ou une balustrade, et ce type de produit est donc impropre à la vente pour ce genre d'application. De plus, cette dégradation est de plus d'autant plus importante que la couleur donnée par la couche à base d'émail est claire.

### 3. Objectifs de l'invention

L'invention a notamment pour objectif de pallier ces derniers inconvénients en résolvant le problème technique, à savoir obtenir une feuille de verre portant un revêtement à base d'émail apte à subir un traitement thermique, en particulier en vue de sa trempe ultérieure, et résistant au transport et à la manutention.

En particulier, un objectif de l'invention, dans au moins un de ses modes de réalisation, est de fournir une feuille de verre portant un revêtement à base d'émail et qui, après avoir été trempée, peut être utilisée pour des applications bifaces.

Plus précisément, un objectif de l'invention, dans au moins un de ses modes de réalisation, est de fournir une feuille de verre portant un revêtement à base d'émail et qui, après avoir été trempée, ne comporte pas ou plus de traces provenant des outils de transfert (ex : les courroies du convoyeur), de transformation (ex : les rôdeuses) et/ou de manutention.

Finalement, un autre objectif de l'invention est de fournir une solution aux désavantages de l'art antérieur qui soit simple, rapide et économique.

### 4. Exposé de l'invention

Conformément à un mode de réalisation particulier, l'invention concerne un article comprenant
(i) au moins une feuille de verre;
(ii) un revêtement à base d'émail sur au moins une des surfaces de ladite feuille de verre; et
(iii) au moins une cire présente sur ledit revêtement.

Ainsi, l'invention repose sur une approche tout à fait nouvelle et inventive car elle permet de solutionner les inconvénients des produits verriers de l'art antérieur et de résoudre le problème technique posé. Les inventeurs ont en effet mis en évidence qu'il était possible d'obtenir, en combinant un revêtement à base d'émail et une cire, un article en verre émaillé (i) qui est apte à subir un traitement thermique, en particulier en vue de sa trempe ultérieure, (ii) de résistance mécanique suffisante avant trempe et (iii) qui, après avoir été trempé, ne comporte plus de traces (provenant des outils de transfert, de transformation et/ou de manutention) présentes avant le traitement thermique.

Les inventeurs ont donc mis en évidence que la présence de cire sur le revêtement à base d'émail permettait l'élimination ultérieure (lors d'un traitement thermique) de telles traces. Ce résultat est surprenant dans la mesure où l'utilisation de cire dans une peinture de manière générale est connue mais pour améliorer les propriétés anti-adhésives ou de glissance de sa surface et non comme agent d'élimination de traces sur un revêtement via un traitement thermique.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des figures annexées, parmi lesquelles :
la figure 1 représente une photographie d'un article émaillé selon l'état de la technique ;
la figure 2 représente des photographies d'un article émaillé selon un mode de réalisation de l'invention;
la figure 3 représente des photographies d'un article émaillé selon un autre mode de réalisation de l'invention.

### 6. Description d'un mode de réalisation de l'invention

L'article selon l'invention est formé d'une feuille de verre. Le verre selon l'invention peut appartenir à diverses catégories. Le verre peut ainsi être un verre de type sodo-calcique, un verre au bore, un verre au plomb, un verre comprenant un ou plusieurs additifs répartis de manière homogène dans sa masse, tels que, par exemple, au moins un colorant inorganique, un composé oxydant, un agent régulateur de la viscosité et/ou un agent facilitant la fusion. De préférence, verre de l'invention est de type sodo-calcique. Le verre de l'invention peut un verre flotté, un verre étiré ou un verre imprimé. Il peut être clair, extra-clair, coloré dans la masse, sablé et/ou maté. L'expression "verre sodo-calcique" est utilisée ici dans son sens large et concerne tout verre qui contient les composants de base suivants (exprimés en pourcentages en poids total de verre) :

| | |
|---|---|
| SiO₂ | 60 à 75 % |
| Na₂O | 10 à 20 % |
| CaO | 0 à 16 % |
| K₂O | 0 à 10 % |
| MgO | 0 à 10 % |
| Al₂O₃ | 0 à 5 % |
| BaO | 0 à 2 % |
| BaO + CaO + MgO | 10 à 20 % |
| K₂O + Na₂O | 10 à 20 %. |

Elle désigne aussi tout verre comprenant les composants de base précédents qui peut comprendre en outre un ou plusieurs additifs.

Selon un mode de réalisation, la feuille de verre est une feuille de verre flotté. De préférence, la feuille de verre est une feuille de verre flotté de type sodo-calcique. Toujours selon ce mode de réalisation, la feuille de verre flotté de l'invention peut avoir une épaisseur variant, par exemple, de 2 à 10 mm.

L'article de l'invention comprend un revêtement à base d'émail sur au moins une des surfaces de la feuille de verre. Selon l'invention, le revêtement peut s'étendre de façon continue sur substantiellement toute la surface de la feuille de verre, par exemple sur plus de 90% de la surface, préférentiellement sur plus de 95% de la surface. Alternativement, le revêtement peut recouvrir partiellement la surface de la feuille de verre.

Selon un mode de réalisation de l'invention, le revêtement a une fonction décorative. De préférence, le revêtement est opaque. De préférence également, le revêtement est coloré (incluant le blanc et le noir).

Selon l'invention, le revêtement à base d'émail comprend une poudre constituée d'une matrice vitreuse (ou fritte de verre) et de pigments inorganiques, en suspension dans un milieu (ou médium). Le milieu selon l'invention est de préférence de nature organique et comprend préférentiellement des éléments thermoréticulables et/ou photoréticulables (sous rayonnements infrarouges ou ultraviolets).

L'invention couvre (i) le revêtement à base d'émail après séchage, c'est-à-dire après élimination du(es) solvant(s) éventuellement présent(s) dans la composition initiale et (ii) s'il y a lieu, le revêtement à base d'émail après réticulation.

De manière préférée, selon un mode de réalisation de l'invention, le revêtement à base d'émail comprend 11 à 40% en poids de matières organiques. Préférentiellement, le revêtement à base d'émail ne comprend pas plus 30% en poids de matières organiques et, de manière encore plus préférée, pas plus de 20 % en poids.

Afin de mesurer le contenu en matières organiques, le revêtement (une quantité généralement de l'ordre de 1 à 2 grammes) a été prélevé de la surface de l'article après avoir été séché (exempt de solvants résiduels) et/ou réticulé et analysé par thermogravimétrie (ATG). L'analyse est réalisée sous air, de 20°C à 1000°C, avec une augmentation de température de 10°C/min. Le contenu en matières organiques est déterminé sur base du résidu, une fois que plus aucune perte de poids n'est observée. Généralement, la matière organique est totalement brûlée aux alentours de 400-500°C.

Un tel contenu en matières organiques dans le revêtement à base d'émail de l'invention permet d'obtenir une résistance mécanique très appréciable dudit revêtement avant sa trempe.

La matière organique dans le revêtement à base d'émail de l'invention peut comprendre au moins un composé sélectionné parmi les composés suivants : polyols, alkydes, acryliques, polyacryliques, polyacrylates, polyméthacrylates, acrylamides, mélamine, polycarbonates, styrènes, vinyl-acryliques, uréthanes, polyuréthanes, polyesters, polyoléfines, uréthane alkydes, polyurée, résines amino, polyamides, epoxides, esters époxy, résines phénoliques, résines de type silicone, PVC, PVB, résines aqueuses et des produits de réactions des composés précités.

Selon l'invention, de manière préférée, le revêtement à base d'émail est en contact direct avec la feuille de verre. Alternativement, un promoteur d'adhésion peut être présent entre la feuille de verre et ledit revêtement. Le promoteur d'adhésion peut, par exemple, comprendre un silane.

Selon l'invention, le revêtement à base d'émail, une fois séché et/ou réticulé, a une épaisseur comprise entre 20 et 100 microns. Par épaisseur de couche, on entend ici l'épaisseur géométrique moyenne. Si l'épaisseur du revêtement est trop faible, cela peut entraîner l'obtention d'un article de verre émaillé ne présentant pas les propriétés de résistance mécanique ou l'esthétisme désiré ; si elle est trop élevée, le séchage et/ou la réticulation peut ne pas être totale et des détachements/dégradations du revêtement peuvent survenir. De telles épaisseurs peuvent être obtenues, durant le procédé de fabrication, par une ou plusieurs application(s).

L'article en verre de l'invention comprend au moins une cire. De manière générale, on désigne par cire, un oligomère dérivé de polymères naturels ou synthétiques. La cire selon l'invention est choisie parmi les cires d'origine naturelle, les cires d'origine synthétique et leurs mélanges dans n'importe quelles proportions. Lorsqu'elle est d'origine naturelle, la cire peut appartenir à la catégorie des cires animales, végétales ou minérales. Les cires minérales issues du pétrole sont préférées et plus particulièrement, les paraffines et les cires microcristallines. Les cires de paraffine consistent principalement en des chaînes hydrocarbonées linéaires. Elles comportent principalement de la paraffine normale (80 à 90%), et dans une moindre mesure, des paraffines ramifiées ainsi que des cycloparaffines. Lorsque la cire est d'origine synthétique, elle peut appartenir aux composés hydrocarbonés obtenus par reformage, aux composés naphtaléniques halogénés et aux polymères éthyléniques et vinyliques. Avantageusement, la cire est choisie parmi les polymères éthyléniques et vinyliques et les polyoléfines. Des exemples de cires synthétiques bien adaptées à l'invention sont le polypropylène, le polytétrafluoroéthylène (PTFE), l'alcool polyvinylique ainsi que leurs mélanges.

L'article en verre de l'invention comprend au moins une cire qui est présente sur le revêtement à base d'émail. Encore alternativement, l'article en verre de l'invention comprend au moins une cire qui est présente dans le revêtement à base d'émail et sur le revêtement à base d'émail. Lorsque la cire est présente dans la composition du revêtement à base, la cire peut se répartir de façon homogène dans la composition du revêtement. Alternativement, la cire peut se répartir de façon hétérogène dans la composition dudit revêtement. Par exemple, la cire peut être présente dans l'épaisseur du revêtement à base d'émail mais à une distance proche de sa surface (celle en contact avec le milieu extérieur).

Toujours selon ce mode de réalisation, la composition du revêtement à base d'émail comprend entre 0.1 à 20 % en poids de cire. Une quantité trop faible de cire ne permettrait pas d'obtenir l'effet recherché. Une quantité trop importante de cire, au-delà d'une certaine valeur, n'apporte plus rien et représente même un inconvénient d'un point économique et écologique dans la mesure où cette cire est ultérieurement brûlée lors du traitement thermique. De manière préférée, la composition du revêtement à base d'émail comprend entre 0.2 à 10 % en poids de cire.

Lors de l'étape de mélange entre la composition émaillée et la cire, la cire peut être sous forme de poudre fine, sous forme d'un liquide plus ou moins visqueux ou sous forme préalablement dispersée ou solubilisée dans un milieu liquide qui peut être composé d'eau, d'un ou plusieurs solvant(s), d'une matrice polymérique, d'une ou plusieurs résines et/ou d'un plastifiant, d'un agent mouillant, etc. La cire sous une des formes précitées est ajoutée directement dans la composition émaillée qui est, de préférence, sous forme liquide, plus ou moins visqueuse. La composition résultante peut alors être mélangée de manière connue.

Différentes méthodes connues en soi peuvent convenir pour déposer la composition émaillée comprenant la cire sur la feuille de verre. Par exemple, il est possible de déposer la composition émaillée par un procédé d'application par rideau (sur une feuille de verre en mouvement) ou par un procédé de pulvérisation. La méthode de sérigraphie peut également être utilisée, tout particulièrement lorsque certaines portions seulement de la feuille de verre doivent être revêtues.

Après l'étape de dépôt de la composition émaillée comprenant la cire, le revêtement obtenu est séché et/ou réticulé (s'il comprend des éléments réticulables), par exemple grâce à la chaleur (dans un four, par exemple) et/ou grâce à des radiations UV ou IR. Cette étape permet au revêtement de durcir et d'adhérer à la feuille de verre. A ce stade, l'émail n'est pas encore fondu ou sintérisé. Par exemple, si l'on considère une étape de réticulation via radiations IR (présence d'éléments réticulables), cette étape est réalisée de préférence à une température d'au moins 150°C et/ou n'excédant pas 300°C ; durant 1 à 20 minutes dans un four statique ou durant 5 à 10 minutes dans un four industriel. De préférence, la température à la surface du verre ne dépassera pas 250°C. Selon l'invention, la cire est présente sur le revêtement à base d'émail. Par cire présente sur le revêtement, on entend que la cire est déposée sur le revêtement mais ne fait pas partie de sa composition. Selon l'invention, la cire est présente sur le revêtement à base d'émail sous forme d'un film. Selon un mode de réalisation de l'invention, le film peut être constitué majoritairement de cire. Selon l'invention et de manière préférée, le film peut comprendre au moins 80% de cire et de manière encore plus préférée, au moins 90 % de cire. Le film de cire selon l'invention peut comprendre des constituants mineurs comme, par exemple, des agents mouillants ou des charges minérales.

De manière préférée également, la cire est en contact direct avec le revêtement à base d'émail.

Selon l'invention, le film a une épaisseur qui varie entre 0,5 et 60 microns. Par épaisseur de film, on entend également l'épaisseur géométrique moyenne.

Selon ce mode de réalisation, l'article en verre est obtenu selon un procédé comprenant les étapes suivantes, dans l'ordre :
(a) le dépôt sur la feuille de verre de la composition émaillée de sorte à former un revêtement ;
(b) le séchage et/ou la réticulation du revêtement à base d'émail; et
(c) le dépôt de la cire sur le revêtement à base d'émail.

Différentes méthodes connues, déjà exposées ci-dessus, peuvent convenir pour déposer la composition émaillée sur la feuille de verre.

Après le dépôt de la composition émaillée, le revêtement obtenu est séché et/ou réticulé, de la même manière que précédemment expliqué.

Ensuite, la cire est déposée sur le revêtement à base d'émail par différentes méthodes d'enduction connues. Avantageusement, la cire peut être déposée sur le revêtement par un procédé de pulvérisation. De préférence, la cire sous forme de poudre ou d'un liquide plus ou moins visqueux est préalablement dispersée ou solubilisée dans milieu liquide qui peut être composé d'eau, d'un ou plusieurs solvant(s), d'une matrice polymérique, d'une ou plusieurs résines et/ou d'un plastifiant, d'un agent mouillant, etc.

Si la cire est déposée sur la feuille de verre en utilisant une dispersion dans un milieu comprenant au moins un solvant et/ou de l'eau, une étape supplémentaire de séchage peut être requise. Classiquement, elle pourra se faire en chauffant la feuille de verre à une température adaptée afin de provoquer l'évaporation du solvant et/ou de l'eau. Avantageusement, la chaleur utilisée pour l'étape précédente de séchage/réticulation du revêtement à base d'émail peut être utilisée pour cette étape.

Selon un mode de réalisation particulier de l'invention, l'article en verre comprend au moins une cire qui est présente dans le revêtement et sur le revêtement sous forme de film. Selon ce mode de réalisation, l'article en verre est obtenu selon un procédé comprenant les étapes suivantes, dans l'ordre:
(a) le mélange entre la composition émaillée et une cire ;
(b) le dépôt sur la feuille de verre de la composition émaillée comprenant la cire de sorte à former un revêtement ;
(c) le séchage et/ou la réticulation du revêtement ; et
(d) le dépôt d'une cire sous forme de film sur le revêtement à base d'émail.

Selon ce mode de réalisation, la cire présente dans le revêtement est la même que la cire présente sur le revêtement. Alternativement, la cire présente dans le revêtement est différente de la cire présente sur le revêtement.

De manière générale, l'article selon l'invention peut être traité thermiquement, en particulier il peut être traité thermiquement en vue d'une trempe ou également en vue de son bombage. Par traitement thermique, on entend un traitement à des températures qui ne sont pas inférieures à 500°C et, de préférence, pas inférieures à 600°C. L'étape de séchage et/ou réticulation ne constitue donc pas un « traitement thermique » au sens de l'invention. Lorsque l'article selon l'invention est traité thermiquement, le revêtement à base d'émail fond et sintérise et la cire, exclusivement de nature organique, est brûlée. L'invention couvre donc un article non traité thermiquement mais qui peut être traité thermiquement (on parle d'article « trempable » ou « bombable »).

Des articles conformes à l'invention peuvent avoir des applications variées. Ces articles peuvent par exemple être utilisés pour des applications décoratives, en simple face ou double face, telles que des portes de meubles, des cloisons, des revêtements muraux, des étagères, des tables, des balustrades, etc. Ils peuvent également être utilisés pour des applications automobiles telles que des pare-brises, par exemple si le revêtement à base d'émail est appliqué en périphérie de la feuille de verre.

Pour des applications décoratives, le revêtement à base d'émail de l'invention peut être coloré. Si l'article est traité thermiquement, la couleur peut changer durant le traitement, dépendant de la composition du revêtement. Si cela se produit, il est possible d'en tenir compte et d'adapter la composition émaillée afin que la couleur de l'article en verre, après son traitement thermique, soit celle désirée.

Les exemples qui suivent illustrent l'invention, sans intention de limiter de quelque façon sa couverture.

### Exemple 1 (comparatif)

Une feuille de verre clair flotté de 4 mm d'épaisseur a été convoyée sur un convoyeur à bandes. Elle est d'abord lavée d'une manière normale. Elle passe ensuite sous un applicateur à rideau où elle est revêtue d'une composition émaillée. La composition émaillée déposée sur la feuille de verre comprend:
- 82% en poids d'un émail blanc de la compagnie FENZI (TEMPVER bianco 3302-928A) ;
- 9% en poids d'un "Clearcoat" de la compagnie FENZI ; et
- 9 % en poids de solvant (Exsol D40).

Le revêtement obtenu est ensuite séché et réticulé à une température de 185°C pendant 5 minutes. L'épaisseur du revêtement est d'approximativement 50 microns.

La feuille de verre revêtue est alors déposée sur des courroies de type caoutchouc pour permettre son découpage et son rôdage. Elle est ensuite lavée dans une machine à laver industrielle, puis trempée de manière connue (chauffage dans un four à 670°C pendant 3 minutes suivi d'un refroidissement rapide à température ambiante).

La feuille de verre qui a été en contact avec les courroies présente des traces, celles-ci sont atténuées après le lavage mais ne disparaissent pas totalement. Elles sont toujours présentes également après la trempe.

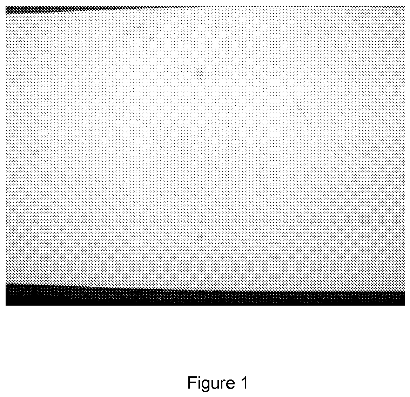

La Figure 1 représente une photographie de la feuille de verre traitée comme ci-dessous après trempe. Elle illustre le fait que les courroies engendrent l'apparition de traces disgracieuses sur le revêtement blanc, traces qui ne disparaissent pas après trempe.

### Exemple 2 (comparatif)

Une feuille de verre clair flotté a de 4 mm d'épaisseur été convoyée sur un convoyeur à bandes. Elle est d'abord lavée d'une manière normale. Elle passe ensuite sous un applicateur à rideau où elle est revêtue d'une composition émaillée. La composition émaillée déposée sur la feuille de verre comprend:
- 82% en poids d'un émail noir de la compagnie FENZI (TEMPVER nero 3400-β990A) ;
- 9% en poids d'un "Clearcoat" de la compagnie FENZI ; et
- 9 % en poids de solvant (Exsol D40).

Le revêtement obtenu est ensuite séché et réticulé à une température de 185°C pendant 5 minutes. L'épaisseur du revêtement obtenu est d'approximativement 50 microns.

La feuille de verre revêtue est alors déposée sur des courroies de type caoutchouc pour permettre son découpage et son rôdage. Elle est ensuite lavée dans une machine à laver industrielle, puis trempée de manière connue (chauffage dans un four à 670°C pendant 3 minutes suivi d'un refroidissement rapide à température ambiante).

La feuille de verre qui a été en contact avec les courroies présente des traces mais qui sont moins visibles que pour l'exemple précédent du fait de la couleur noire. Ces traces sont atténuées après le lavage mais ne disparaissent pas totalement. Elles sont toujours présentes également après la trempe.

### Exemples 3-15 (comparatifs)

Des feuilles de verre clair flotté de 4 mm d'épaisseur ont été convoyées sur un convoyeur à bandes. Elles sont d'abord lavées d'une manière normale. Elles passent ensuite sous un applicateur à rideau où elles sont revêtues d'une composition émaillée. La composition émaillée déposée sur les feuilles de verre est soit :
- la *composition* 1 : 82% en poids d'un émail blanc de la compagnie FENZI (TEMPVER bianco 3302-928A), 9% en poids d'un "Clearcoat" de la compagnie FENZI et 9 % en poids de solvant (Exsol D40); soit
- la *composition 2:* 82% en poids d'un émail noir de la compagnie FENZI (TEMPVER TEMPVER nero 3400-β990A) et 9% en poids d'un "Clearcoat" de la compagnie FENZI et 9 % en poids de solvant (Exsol D40),
à laquelle a été ajoutée la cire.

Les cires utilisées sont des cires Lancowax fournies par la compagnie Lubrizol de référence lanco TF1778 (polytétrafluoroéthylène) et lanco PP1350 (polypropylène). Ces cires ont été incorporées dans la composition émaillée telles quelles, c'est-à-dire sous forme de poudre, ou alors sous forme dispersée dans un milieu liquide. Les dispersions qui ont été utilisés sont :
- *Dispersion* 1 : 32% en poids de cire dispersée dans un mélange de polyester et de mélamine ; et
- *Dispersion 2 :* 20% en poids de cire dispersée dans un distillat aliphatique du pétrole obtenu entre 140-200°C (référence ED40).

Le revêtement obtenu est ensuite séché et réticulé à une température de 185°C pendant 5 minutes. L'épaisseur du revêtement est alors d'approximativement 50 microns.

Les feuilles de verre revêtues sont alors entreposées et stockées en piles. Lors de leur découpe et rôdage, elles sont déposées sur des courroies de type caoutchouc pour permettre leur manipulation et leur transport. Elles sont ensuite lavées dans une machine à laver industrielle, puis trempées de la même manière que les exemples précédents. Le tableau reprend, pour chacun des exemples 3 à 15, la quantité et la forme de la cire ajoutée à la composition émaillée (1 ou 2), et l'évaluation visuelle des traces noires après découpe et rôdage, après lavage en machine à laver et après la trempe.

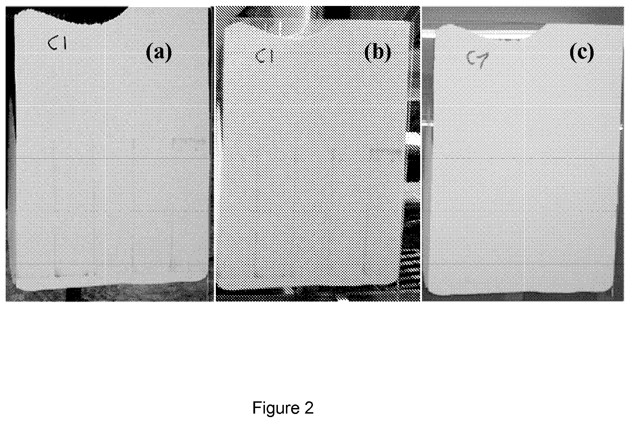

La Figure 2 représente des photographies de l'article de l'exemple 4 (a) après manipulation et transport sur les courroies, (b) après nettoyage en machine-à-laver et (c) après trempe. Ces images illustrent bien le fait que :
- les courroies engendrent l'apparition de traces disgracieuses sur le revêtement blanc alors que celui était d'une bonne esthétique après séchage/réticulation,
- les traces s'estompent légèrement après lavage mais ce traitement n'est pas suffisant; et
- les traces ont totalement disparu après la trempe.

Ces faits sont également illustrés grâce au tableau et l'évaluation visuelle des traces. Ainsi, ces exemples permettent de montrer que l'utilisation de cire au sein du revêtement à base d'émail ne permet pas d'éviter les traces mais bien de les voir disparaître lorsqu'on trempe le produit.

### Exemple 16 (conforme à l'invention)

Une feuille de verre clair flotté de 4 mm d'épaisseur a été convoyée sur un convoyeur à bandes. Elle est d'abord lavée d'une manière normale. Elle passe ensuite sous un applicateur à rideau où elle est revêtue d'une composition émaillée. La composition émaillée déposée sur la feuille de verre comprend :
- 82% en poids d'un émail blanc de la compagnie FENZI (TEMPVER bianco 3302-928A) ;
- 9% en poids d'un "Clearcoat" de la compagnie FENZI ; et
- 9 % en poids de solvant (Exsol D40).

Le revêtement obtenu est ensuite séché et réticulé à une température de 185°C pendant 5 minutes dans un four. L'épaisseur du revêtement est alors d'approximativement 50 microns.

Une dispersion aqueuse à 5% en poids de cire de référence 0730E fournie par la compagnie Michelman (alcool polyvinylique) a ensuite été appliquée sur le revêtement à base d'émail par pulvérisation à raison de 20 g de dispersion/m² de surface de verre alors que la feuille de verre, sortie du four, avait une température d'environ 60°C.

La feuille de verre obtenue est ensuite déposée sur des courroies de type caoutchouc pour permettre leur manipulation et leur transport, lors de leur découpe et rôdage. Elle est ensuite lavée dans une machine à laver industrielle, puis trempée de la même manière que les exemples précédents.

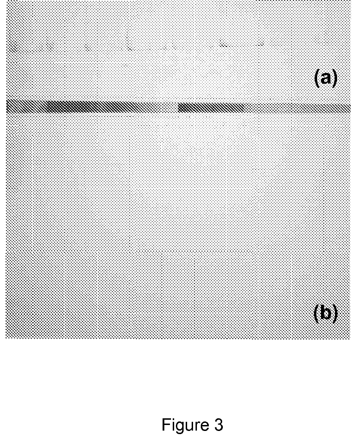

La Figure 3 représente des photographies de l'exemple 16 (a) après manipulation et transport sur les courroies et (b) après trempe. Ces images illustrent également le fait que les courroies engendrent l'apparition de traces disgracieuses sur le revêtement blanc et que les traces ont totalement disparu après la trempe.

Ces photographies illustrent donc le fait que l'utilisation de cire sur le revêtement à base d'émail ne permet pas d'éviter les traces mais bien de les voir disparaître lorsqu'on trempe le produit.

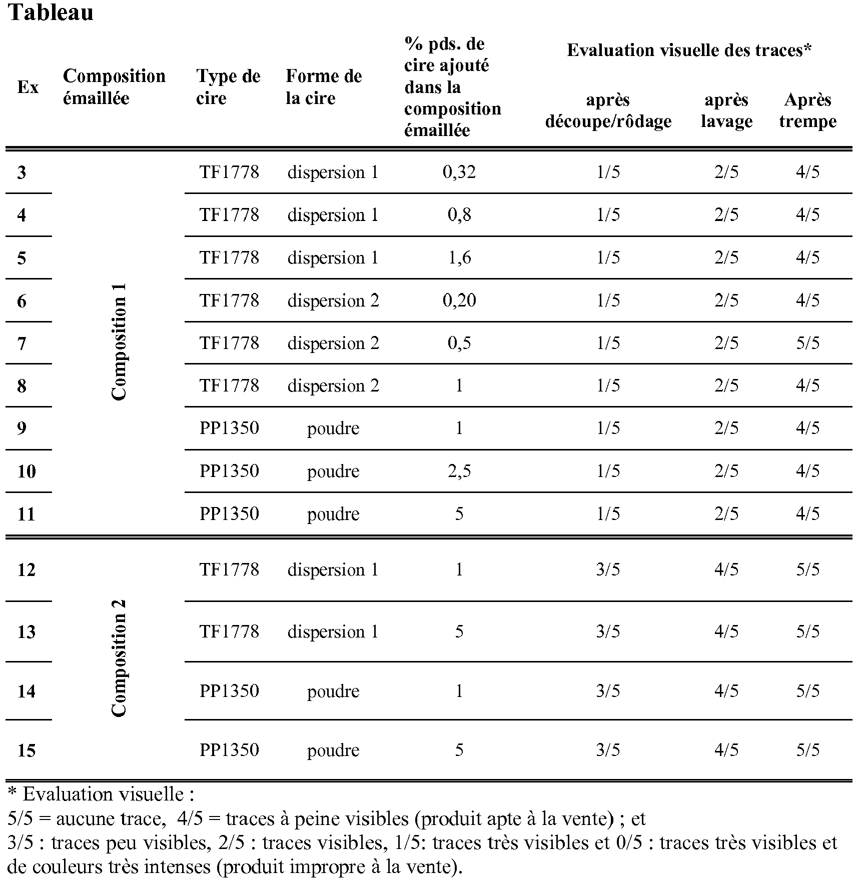

## Revendications

1. Article comprenant
(i) au moins une feuille de verre ;
(ii) un revêtement à base d'émail sur au moins une des surfaces de ladite feuille de verre; et
(iii) au moins une cire présente sur ledit revêtement sous forme d'un film.

2. Article selon la revendication 1, **caractérisée en ce que** le film comprend au moins 80% de cire.

3. Article selon la revendication 2, **caractérisée en ce que** le film comprend au moins 90% de cire.

4. Article selon l'une des revendications 1 à 3, **caractérisée en ce que** le film a une épaisseur qui varie entre 0,5 et 60 microns.

5. Article selon l'une des revendications 1 à 4, **caractérisée en ce que** la cire est en contact direct avec ledit revêtement.

6. Article selon l'une des revendications 1 à 5, **caractérisée en ce que** la cire est présente dans et sur ledit revêtement.

7. Article selon l'une des revendications précédentes, **caractérisé en ce que** la cire est sélectionnée parmi les cires d'origine naturelle, les cires d'origine synthétique et leurs mélanges dans n'importe quelles proportions.

8. Article selon l'une des revendications précédentes, **caractérisée en ce que** le revêtement à base d'émail est en contact direct avec la feuille de verre.

## Patentansprüche

1. Gegenstand, umfassend
(i) mindestens eine Glastafel,
(ii) eine Beschichtung auf der Basis von Emaille auf mindestens einer der Oberfläche der Glastafel und
(iii) mindestens ein Wachs, das auf der Beschichtung in Form eines Films vorliegt.

2. Gegenstand nach Anspruch 1, **dadurch gekennzeichnet, dass** der Film mindestens 80% Wachs umfasst.

3. Gegenstand nach Anspruch 2, **dadurch gekennzeichnet, dass** der Film mindestens 90% Wachs umfasst.

4. Gegenstand nach einem der Ansprüche 1 bis 3, **dadurch gekennzeichnet, dass** der Film eine Dicke hat, die zwischen 0,5 und 60 µm variiert.

5. Gegenstand nach einem der Ansprüche 1 bis 4, **dadurch gekennzeichnet, dass** das Wachs in direktem Kontakt mit der Beschichtung steht.

6. Gegenstand nach einem der Ansprüche 1 bis 5, **dadurch gekennzeichnet, dass** das Wachs in und auf der Beschichtung vorhanden ist.

7. Gegenstand nach einem der vorhergehenden Ansprüche, **dadurch gekennzeichnet, dass** das Wachs aus Wachsen natürlichen Ursprungs, Wachsen synthetischen Ursprungs und deren Gemischen in beliebigen Verhältnissen ausgewählt ist.

8. Gegenstand nach einem der vorhergehenden Ansprüche, **dadurch gekennzeichnet, dass** die Beschichtung auf der Basis von Emaille in direktem Kontakt mit der Glastafel steht.

## Claims

1. Article comprising:
(i) at least one glass sheet;
(ii) an enamel-based coating on at least one of the surfaces of the said glass sheet; and
(iii) at least one wax present on the said coating in the form of a film.

2. Article according to Claim 1, **characterized in that** the film comprises at least 80% of wax.

3. Article according to Claim 2, **characterized in that** the film comprises at least 90% of wax.

4. Article according to one of Claims 1 to 3, **characterized in that** the film has a thickness which varies between 0.5 and 60 microns.

5. Article according to one of Claims 1 to 4, **characterized in that** the wax is in direct contact with the said coating.

6. Article according to one of Claims 1 to 5, **characterized in that** the wax is present in and on the said coating.

7. Article according to one of the preceding claims, **characterized in that** the wax is selected from waxes of natural origin, waxes of synthetic origin and their mixtures in any proportions.

8. Article according to one of the preceding claims, **characterized in that** the enamel-based coating is in direct contact with the glass sheet.
